# EUROPEAN PATENT APPLICATION

(11) **EP 4 350 913 A1**
(43) Date of publication of application: **10.04.2024**
(21) Application number: 23198822.1
(22) Date of filing: 21.09.2023
(51) Int. Cl.: H02G 3/06, H02G 3/04

(54) **CABLE TRAY DEVICE**

(30) Priority: 04.10.2022 FR 2210148
(71) Applicant: Gewiss France SAS, 21430 Liernais (FR)
(72) Inventor: LEGUY, Claude, 21430 MARCHESEUIL (FR)
(74) Representative: Forattini, Amelia

(57) **Abstract**

Cable tray device having a first tray section (2) and two splice bars (4) for connecting the first tray section (2) to a second tray section (3); each tray section (2, 3) has a U-shaped profile with a substantially flat bottom (21, 31) delimited between two walls (22, 32); the splice bars (4) are arranged on the outside of the cable tray sections (2, 3); the walls (22, 32) of the tray sections (2, 3) are pierced by traversing and oblong holes (23); the bottom (21) comprises traversing and oblong holes (24); the walls (22) have a curved upper edge (25) which extends over the entire length of each wall opposite to the bottom (21); each splice bar (4) has an L-shaped configuration and comprises a base branch (41) and a side branch (42); the base branch (41) has strips (43); the base branch (41) has base hoops (44) provided with oblique latching fins (45); the lateral branch (42) has an inclined end (46) which terminates with an inclined edge (47) provided with a series of tongues (48), folded in the opposite direction to the inclined edge (47); the lateral branch (42) has a series of lateral hoops (49) designed to pass through the traversing and oblong holes (23) of the respective walls (22) of the tray sections (2, 3).

## Description

The present invention relates to a cable tray device.

Cable trays are made by several sections that are joined together by splice bars.

FR2686141A1 discloses a cable tray comprising two sections interconnected by two splice bars or plates. The two sections are first placed end to end, then the splice bars are brought to the junction area between the two sections and automatically fastened. The splice bars and tray sections are stored and delivered separately and then assembled on site. The operator therefore must gather the right number of cable tray sections and splice bars before starting to work, which considerably increases the assembly time. Also, the splice bars and tray sections are stored separately under different references. So, the volume occupied by the parts during the storage is greater, and the management of the number of splice bars required in relation to the number of cable tray is costly.

To overcome those disadvantages, pre-jointed cable trays are known, in which two connecting splice bars are permanently mounted on a section at its end.

This allows to assign the same reference to the section of cable trays and to the splice bars, and simplifies the operator's work, because the operator has everything at hand in order to work. However, as the splice bars are mounted at the end of the cable tray, they protrude from the cable tray and increase its overall length. This extra length, in addition to the bulk, leads to logistical difficulties because the cable tray device has no longer a standard length and the infrastructures used to handle the cable tray sections are not designed to operate cable trays that do not have a standard length.

EP0695009A1 a cable trays coupling bar having a right-angle profile and that fits in the corners of the cable tray, either inside or outside the tray. The top edge of the joining bar carries at either end two bent tabs that clip into slots in the wall of the cable tray. The central part of the edge of the joining bar carries an elastic strip that fits under the rolled lip of the cable tray. The elastic strip is put in place with the joining bar at an angle to the cable tray, and rotated downward, tensioning the elastic part under the lip. The flat side of the joining bar is then locked in place on the bottom of the tray using a clip that passes through one of the holes in the bottom of the cable tray.

ITPD20130096A1 discloses a cable tray comprising a U-section profile, with opposite side walls and bottom wall, and at least one junction element between two cable channels aligned and consecutive, suitable to be constrained between the two opposite ends of the cable channels to be joined. On the side walls and wall bottom, the cable channel has grooves/holes or seats with modular or constant pitch. The joining element has a flat wall of a shape corresponding to the side walls and adapted to couple with the walls of the two cable ducts to be joined. A bent lower edge forms an L-shaped section suitable for coupling to the edge of the bottom walls of the two cable ducts to be joined. An upper edge is shaped with arched appendages and faces the part of L-shaped edge, suitable for insertion in corresponding holes or seats made near the upper edge of the side wall of the cable duct. Arched appendages or teeth or protrusions on the lower L-shaped edge, with convexity facing upwards, are configured to snap into corresponding holes or seats made on the bottom walls, near the edges of the two cable ducts to be joined.

EP2833496A1 discloses a cable tray which essentially resolves those problems thanks to a device which provides sections of standard length. Each section includes a bottom delimited between two walls. Two adjacent sections are joined by to two joining splice bars associated with the inner part of the walls and capable of being driven into the tray sections. During storage and transport, the splice bars are temporarily mounted in the tray section, in a configuration in which the overall length of the device does not increase. In this temporal configuration, the splice bars are temporarily blocked in translation along the walls of the section and are blocked superimposed on the section by latching means which oppose the pivoting of the splice bar. The sections of tray can therefore be handled freely without the risk of a splice bar becoming detached from the tray section.

The above system applies well to trays in which each section has longitudinal ribs, which extend along the entire length of the bottom of the same section, and the inner face is constant, independently of the thickness of the track.

The conventional trays are made of sections with no ribs in the lower part and the outer surface of the tray is constant, regardless of the thickness of the tray.

Consequently, the problem arises of positioning the joining splice bars in order to maintain a constant seat regardless of the thickness of the trays to be assembled.

The aim of this invention is to produce a cable tray that is more advanced than the conventional systems mentioned above.

An aim of this invention is to produce a cable tray that enables to position the joining splice bars, maintaining a constant seat regardless of the thickness of the cable trays to be assembled.

A further aim of the invention is to produce a cable tray which allows a quick and safe assembly.

A further aim of this invention is to produce a cable tray equipped with a system for preventing unwanted detachments.

A further aim of this invention is to produce a cable tray that ensures good rigidity between the adjacent tray sections.

The above aims and other aims that will be more apparent hereinafter, are achieved by a cable tray device as claimed in the appended claims.

Preferably, an upper part of the side branch of the splice bar is inserted into the upper curved edges of the sections.

Preferably, the sloping edge is provided with tongues, folded in the opposite direction to the sloping edge.

Preferably, the strips of said base branch have the function of stop in the bottom of said tray sections.

Preferably, the base arm comprises a latch fin which is used to lock the splice bar inside one of the tray sections, during transport and storage of the device.

Preferably, the splice bar has a sign, made in the middle of the length of the splice bar, having the function of facilitating the pre-positioning of the splice bar with respect to the sections to be connected.

Preferably, the inclined edge of the lateral branch of the splice bars has a central free space, which allows to break down the formation of a possible lump of zinc which has been formed in the end of the curved upper edge of the tray sections.

Further characteristics and advantages will become better apparent from the description of preferred but not exclusive embodiments of the invention, illustrated by way of non-limiting example in the accompanying drawings, wherein:

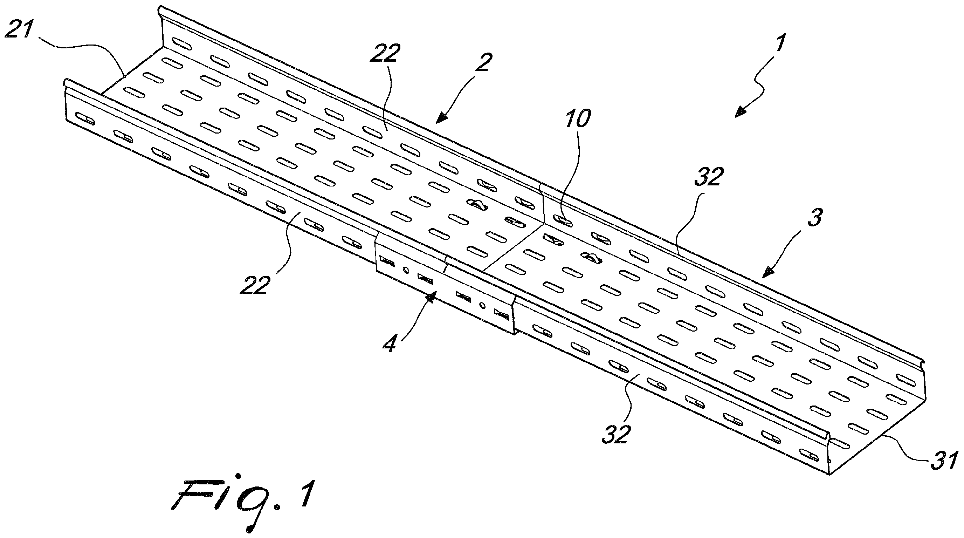

Figure 1 is a perspective view showing two sections of tray joined together;

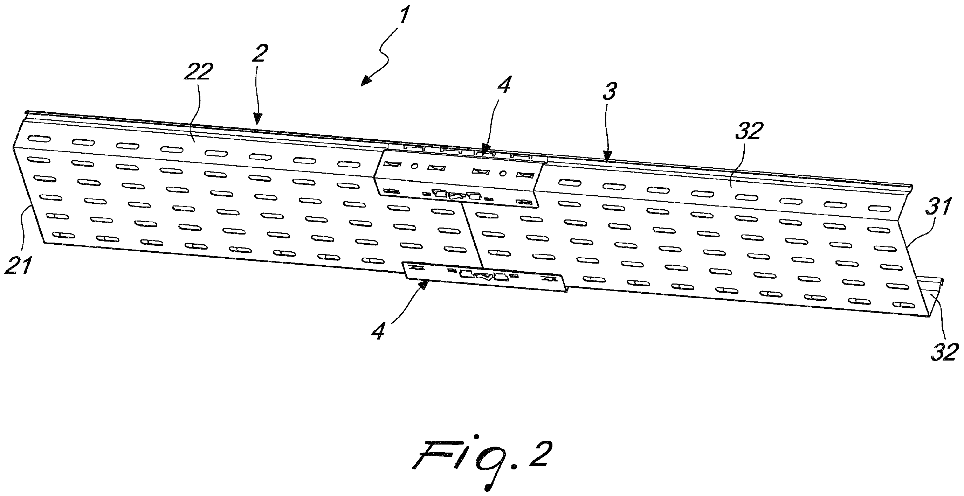

Figure 2 is a perspective view showing the lower part of the tray in figure 1;

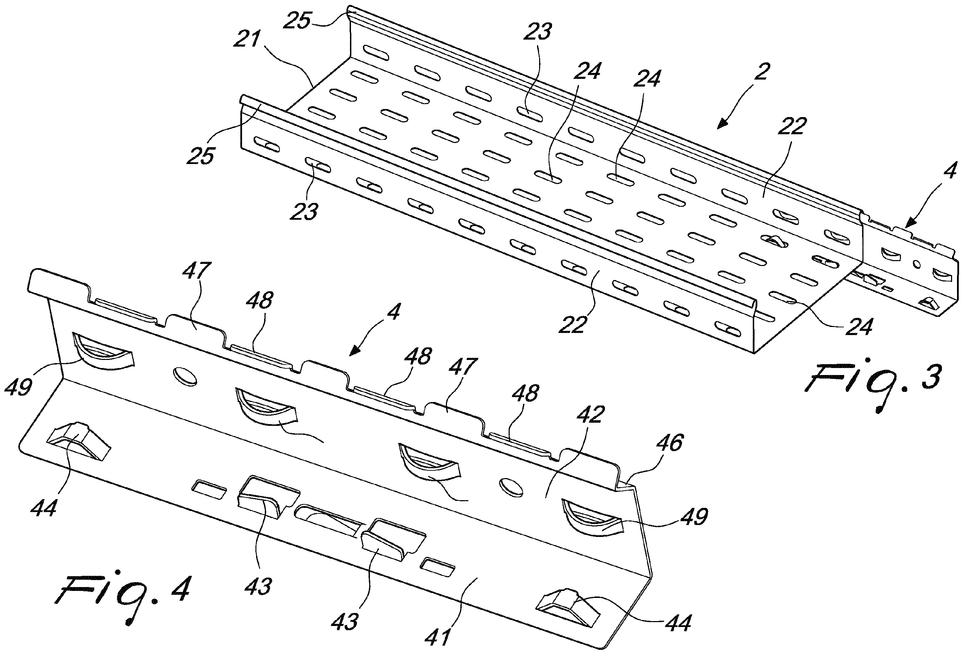

Figure 3 is a perspective view of a tray section and of a joining splice bar connected to it;
Figure 4 is a perspective view of the joining splice bar;
Figure 5 is a perspective view of the outer side of the tray section and the joining splice bar connected to it, of figure 3;
Figure 6 is a side view showing the fastening stage of the joining splice bar;
Figure 7 is a side view showing the joining splice bar attached to the tray section;
Figure 8 is a perspective view of the opposite side, with regard to figure 4, of the joining splice bar;
Figure 9 is an enlarged view showing in detail the portion of the splice bar interrupted in order to accommodate an area of the section having a zinc block;
Figure 10 is an enlarged view illustrating in detail signs of positioning of the splice bar in relation to the section;
Figure 11 is an enlarged view showing in detail an arched hole protruding from the splice bar;
Figure 12 is a perspective view of a tray section in which two joining splice bars are positioned, in the transport and storage configuration;
Figure 13 is an enlarged view illustrating in detail a latch fin of a joining splice bar in the transport and storage phase of the tray sections;
Figure 14 is a perspective view of the outer side of the tray section of figure 12, in which two joining splice bars are positioned, in the transport and storage configuration.

With reference to the cited figures, the cable tray device according to the invention, generally designated with reference number 1, comprises a first tray section 2 and two splice bars 4 for connecting the first tray section 2 with another tray section 3.

Each tray section 2 and 3 is, for example, made of folded and punched sheet metal and has a U-shaped profile with a substantially flat base, 21 and 31 respectively, formed between two walls 22 and 32, respectively.

The walls 22 and 32 have traversing and oblong holes 23.

The base 21 has different traversing and oblong holes 24, evenly spaced.

The tray sections 2 and 3 are identical and the components described here for one section are also present in the adjacent section.

The walls 22 have a curved upper edge 25 which extends along the entire length of the wall opposite position to the bottom 21.

The splice bar 4 has an L-shaped configuration and comprises a base arm 41 and a side arm 42.

The base arm 41 has strips 43, formed by folding portions partially cut by the base arm 41.

The base arm 41 also has base hoops 44 provided with transverse latch fins 45.

The side branch 42 has an inclined end 46 which terminates with an inclined edge 47 provided with a tongues 48, folded in the opposite direction to the inclined edge 47.

The lateral branch 42 further has a number of lateral hoops 49 which are configured to be inserted in the traversing and oblong holes 23 of the respective wall 22 of the tray sections 2 and 3.

The base arm comprises a latching fin 50 which serves to lock the splice bar 4 inside the track 2, during transport.

The splice bar 4 has a sign 51, made in the middle of the length of the same splice bar 4, having the function of facilitating the pre-positioning of the splice bar 4 with respect to the sections 2 and 3 to be connected, as described later.

The inclined edge 47 has a central free space 52, which allows to break down the formation of any zinc lump 53, as described later.

The operation of the cable tray device according to the invention is as follows.

Sections 2 and 3 are joined together by a pair of splice bars 4, one on each side.

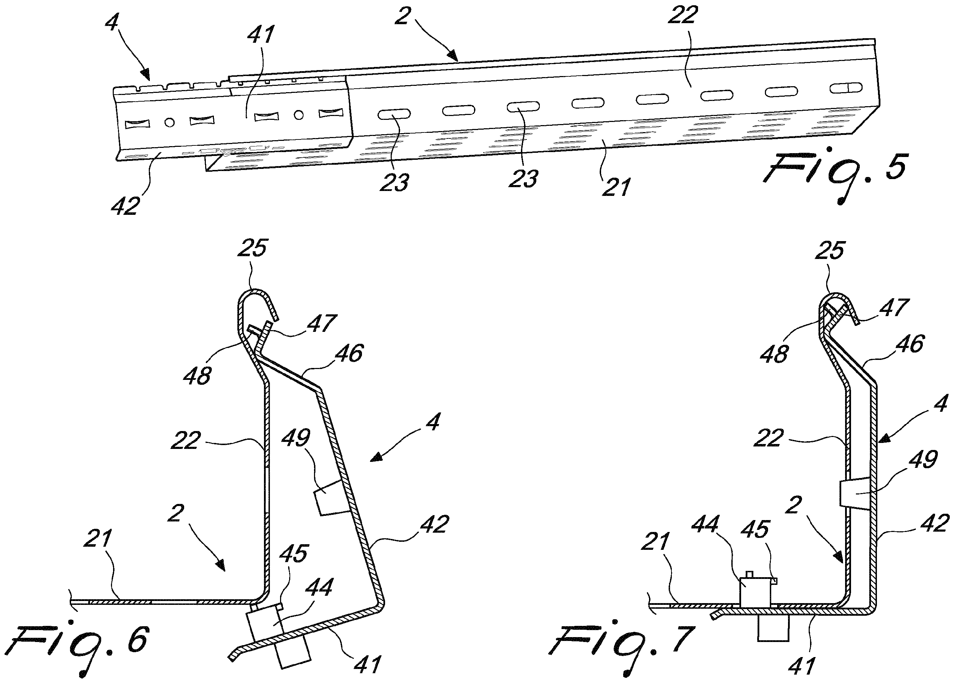

The upper part of the side arm 42 of the splice bar 4 is inserted into the curved upper edges 25 of sections 2 and 3, as shown in Figure 6.

The splice bar 4 is then pivoted, as shown in Figure 7, in order to lock the parts together.

The inclined edge 47 has tongues 48, folded in the opposite direction to the inclined edge 47, which reduce the assembly effort.

In fact, the assembly is performed thanks to the elasticity of the components. When the splice bar 4 is rotated, the inclined edge 47 reacts to the return action of the curved upper edge 25 of the sections 2 and 3 joined together.

The tongues 48 formed in the inclined edge 47 advantageously provide elasticity to the inclined edge 47 allowing elastic deformation.

On the contrary, a continuous inclined edge along the entire length of the splice bar would cause a double effort, necessary to block the junction.

This is even more true when the thickness of the metal sheet of the tray is greater, because in this case the reaction is greater because the elasticity is less.

The lateral hoops 49 formed in the lateral branch 42 are inserted in the traversing and oblong holes 23 of the respective wall 22 of the tray sections 2 and 3 and thus block the rotation about the longitudinal axis of the tray junction base 21.

This has the effect of limiting the longitudinal deformation of the tray when, for example, the junction is positioned in the centre of the span between two supports.

The locking system offers a large contact surface, which allows a high level of pressure to be exerted between the splice bar and the tray.

The pressure is obtained when the splice bar reaches its final position, wellillustrated in Figure 7, in which the lower part, base arm 41, provides a leverage effect that multiplies the effort.

This effort eliminates the play in the junction and therefore guarantees the rigidity of the system.

The device offers further means for increasing the mechanical characteristics.

The lateral hoops 49 made in the lateral branch 42 are inserted in the traversing and oblongs holes 23 of the respective wall 22 of the tray sections 2 and 3 in order to lock the two sections along the axis passing through the junction plane of the tray.

This allows to limit the longitudinal deflection of the tray when, for example, it is placed on a support with the junction in the centre of the gap.

A further means of increasing the absorbed pair, to limit the bending of the tray, consists of strips 43 formed in the base branch 41, which have a stop function in the lower zone of the junction, i.e., the bottom 21 of the sections 2 and 3.

During assembly, the strips 43 are inserted into the traversing and oblong holes 24 in the bottom 21 of the two adjoining sections 2 and 3, eliminating the degree of freedom in the longitudinal direction.

This locking action allows the splice bars and the tray section assembly to work in tension in the lower part and in tension in the upper part, without any possible movement.

This has the effect of eliminating every rotational degree of freedom and therefore limiting overall flexion.

Prior art products have joining splice bars that are generally supplied in containers separate from the tray sections.

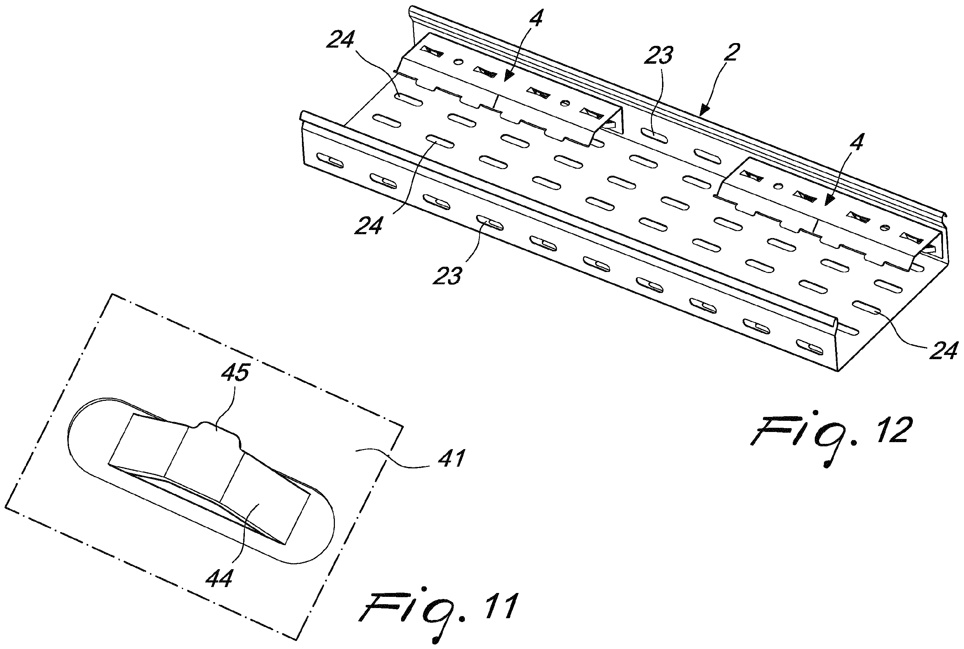

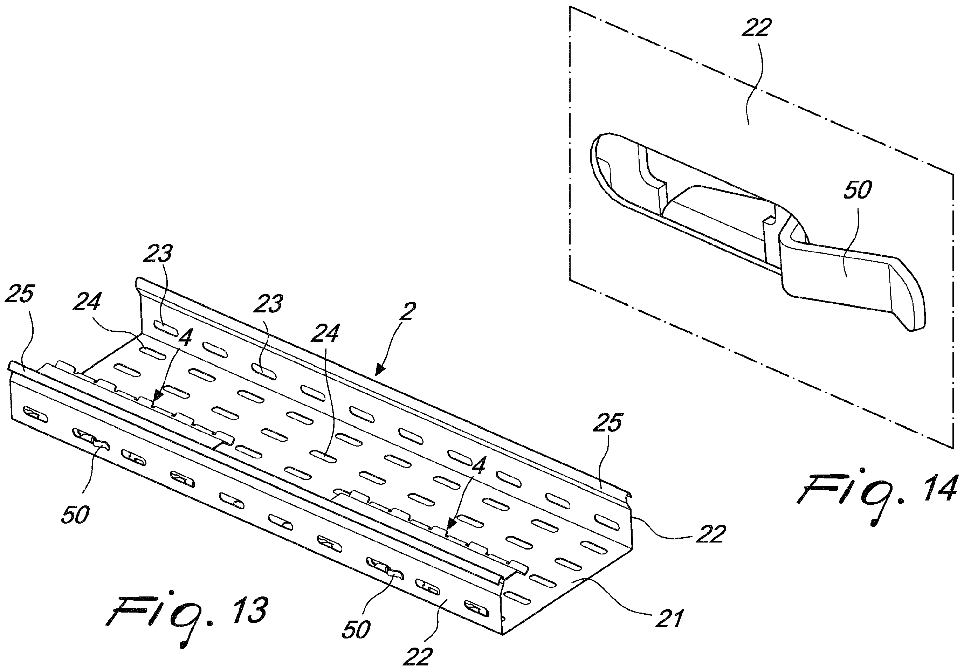

On the contrary, according to the present invention, the splice bars 4 are provided with latch fins 50, formed in the base arm, which allows the splice bar 4 to be blocked inside the track 2, during transport, as illustrated in Figures 12-14.

In this way, the splice bars 4 are pre-positioned at each end of each tray section, allowing the splice bars to be made available immediately in the area where they will be used.

This reduces the preparation time, as each point of union between the sections is immediately supplied with the relative joining splice bars.

A further advantage from the point of view of installation operations is due to the presence of the sign 51, made in the middle of the splice bar 4, whose function is to facilitate the pre-positioning of the splice bar 4 with respect to the sections 3 and 4 to be connected.

When the splice bar 4 is correctly positioned, with the help of the sign 51, all the latching elements, the bands 43, the base hoops 44 and the side hoops 49, fit perfectly into the housings provided.

A further advantage is the presence of the central free space 52 in the inclined edge 47.

When the products are hot dip galvanised, some zinc may remain in the end of the curved upper edge 25 of sections 2 and 3.

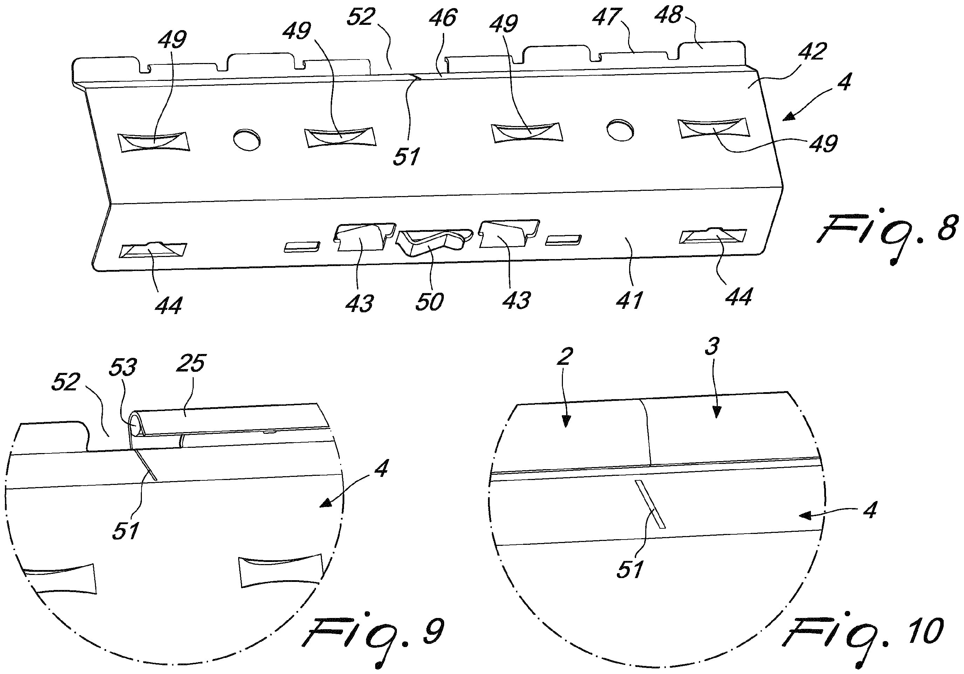

According to the invention, the splice bar 4 has the central free space 52 which creates a free zone that can receive a lump of zinc 53, as schematically illustrated in figure 9. The central free space 52 allows the upper part of the splice bar to occupy the curved upper edge 25 of sections 2 and 3.

The present invention achieves the intended aims by a cable tray device in which the tray sections are devoid of ribs in the lower part and the outer face of the sections is constant, regardless of the thickness of the tray.

By positioning the splice bars on the outside, this allows, to create an invariable environment, maintaining the overall functionality regardless of the thickness of the tray sections to be joined.

None of the prior art devices cited in the introduction show curved upper edge of the sections of cable tray in the opposite position from the bottom nor a base of the splice featuring base hoops with cross-locking fins.

According to the present invention, bending the edge outwards rather than inwards makes it possible to mount the splice on the outside while using the curved edge as a means of fixing the splice, which makes the assembly operation more reliable and easier. Also, this allows the same splint to be more versatile, in particular being adapted to sections of different dimensions in a manner not described or suggested by the prior art of record.

An advantage of the invention is the rapid assembly system due to the elasticity of the splice bar and the configuration of the side branch 42 with inclined end 46 which ends with the inclined edge 47 fitted with tongues 48.

When the splice bar is rotated, the inclined edge 47 reacts to the return of the curved upper edge 25 of the tray section with reduced effort, thanks to the presence of the tongues 48, folded in the opposite direction to the inclined edge 47.

If the inclined edge 47 were continuous along the entire length of the junction, the force required to block the junction would be approximately double.

This is even more true when the thickness of the tray sheet increases, because in this case the reaction is greater because the elasticity is less.

A further advantage of the invention is due to the system for preventing unwanted detachments, consisting of the system of lateral hoops 49 which are inserted in the traversing and oblong holes 23 of the respective wall 22 of the tray sections 2 and 3.

The system also provides good rigidity between two tray sections.

The area where the splice bar connects to each tray section has a large contact surface where there is a high level of pressure between the splice bar and the tray sections.

The contact pressure is obtained when the splice bar reaches its final position. The lower part of the splice bar provides a lever effect that multiplies the force.

This force eliminates the backlash in the junction and therefore guarantees the rigidity of the system.

A further advantage of the invention is due to the presence of strips 43 in the base arm 41, which increase the pair absorbed in order to limit bending of the cable tray sections.

In the assembled position, the strips 43 of the splice bars 4 are inserted into the traversing and oblong holes 24 of the base 21 of the tray sections, preventing any reciprocal longitudinal movement.

This latching system allows the splice bars and tray section assembly to work in tension in the lower part and in tension in the upper part without any possible movement.

This has the effect of eliminating every degree of freedom of rotation and therefore limiting overall flexion.

A further advantage of the invention is that the joining splice bar 4 is associated with each tray section 2 and 3 in order to enable the components to be assembled quickly and securely.

A further advantage of the invention is due to the presence of a sign 51, made in the middle of the length of the splice bar 4, having the function of facilitating the pre-positioning of the splice bar 4 with respect to the sections 2 and 3 to be connected.

A further advantage of the invention is due to the presence of the central free space 52, formed in the inclined edge 47, which allows to break down the formation of a possible lump of zinc 53.

## Claims

1. Cable tray device comprising a first tray section (2), a second tray section (3) and two splice bars (4) for connecting the first tray section (2) to the second cable tray section (3); each cable tray section (2, 3) having a U-shaped profile with a substantially flat bottom (21, 31) delimited between two walls (22, 32); said device being **characterized in that** said splice bars (4) are arranged externally of said cable tray sections (2, 3); said walls (22, 32) of said cable tray sections (2, 3) being pierced by traversing and oblong holes (23); said bottom (21) comprising traversing and oblong holes (24); said walls (22) having a curved upper edge (25) which extends over the entire length of each wall opposite to said bottom (21); each of said splice bars (4) having an L-shaped configuration and comprising a base arm (41) and a side arm (42); said base arm (41) having strips (43); said base arm (41) having base hoops (44) provided with transverse latching fins (45); said side arm (42) having an inclined end (46) terminating with an inclined edge (47) provided with tongues (48), folded in the opposite direction from said inclined edge (47); said lateral branch (42) having lateral hoops (49) configured to pass through said traversing and oblong holes (23) of respective walls (22) of said tray sections (2, 3), wherein an upper portion of said lateral branch (42) of said splice bar (4) is inserted into said curved upper edges (25) of said sections (2, 3).

2. Device, according to claim 1, **characterized in that** said strips (43) are inserted into said traversing and oblong holes (24) of said bottom (21) of said two contiguous sections (2, 3) after the assembly, eliminating a degree of freedom in a longitudinal direction.

3. Device, according to one or more of the preceding claims, **characterized in that** said strips (43) of said base branch (41) have the function of stop in said bottom (21) of said cable tray sections (2, 3).

4. Device, according to one or more of the preceding claims, **characterized in that** said base branch (41) comprises a latching fin (50) which serves to block said splice bar (4) inside one of said tray sections (2, 3), during transport and storage of said device.

5. Device, according to one or more of the preceding claims, **characterized in that** said splice bar (4) has a sign (51), formed in the middle of the length of said splice bar (4), configured to facilitating the pre-positioning of said splice bar (4) with respect to said sections (2, 3) to be connected.

6. Device according to one or more of the preceding claims, **characterized in that** said inclined edge (47) of said lateral branch (42) of said splice bar (4) has a central free space (52), configured to receive a possible lump of zinc (53) which has formed in the end of said curved upper edge (25) of said tray sections (2, 3).
